# EUROPÄISCHE PATENTANMELDUNG

(11) **EP 3 181 484 A1**
(43) Veröffentlichungstag der Anmeldung: **21.06.2017**
(21) Anmeldenummer: 15200540.1
(22) Anmeldetag: 16.12.2015
(51) Int. Cl.: B65D 85/804

(54) **KAPSELBECHER EINER KAFFEEKAPSEL**

(71) Anmelder: Mühlemann IP GmbH, 8260 Stein am Rhein (CH)
(72) Erfinder: Mühlemann, Rolf, 8255 Schlattingen (CH)
(74) Vertreter: Straub, Bernd

(57) **Zusammenfassung**

Es wird ein aus Kunststoff gefertigter Kapselbecher (1) vorgeschlagen, der dank seiner Formgebung beim Extraktionsvorgang sich kaum verformt und eine verbessertes Eindringen der Injektionsnadeln der Extraktionsmaschine bewirkt.

Der Kapselbecher 1 besitzt eine entsprechende konische Mantelwand, die am oberen Rand einen nach aussen ragenden Flansch (3) aufweist und am gegenüberliegenden Ende durch einen Becherboden (4) vollständig geschlossen ist. Der Becherboden (4) weist einen Übergangsbereich auf, der von der konischen Mantelwand (2) über zwei gegenläufige Krümmungen in einer Ringwand 5 übergeht. Der untere Rand (8) der Ringwand (5) geht über eine verdünnte, zum Innenraum (20) hin geneigt verlaufenden Bereich zu einer Platte (6). Diese zentrische Platte (6) weist eine Wandstärke entsprechend der Wandstärke der Mantelwand (2) auf. Die verdünnte Ringfläche (7) bildet dabei eine Injektionsmembran.

## Beschreibung

Die vorliegende Erfindung betrifft einen Kapselbecher zur Fertigung einer Kaffeekapsel, die in einem Extraktionsbecher einer Extraktionskaffeemaschine Verwendung findet, und entsprechend so geformt ist, dass sie in den Extraktionsbecher der Extraktionskaffeemaschine Aufnahme findet.

Solche Kaffeekapseln bestehen aus einem Kapselbecher, in den eine vorgegebene Menge Kaffeepulver abgefüllt wird und dann mittels einer Aluminiumfolie, die auf einem extraktionsseitigen Flansch der Kaffeekapsel aufgeschweisst und damit verschlossen wird.

Die meistverbreitete Kaffeekapsel dieser Art wird von der Firma Nestle SA unter dem geschützten Warenzeichen Nespresso® weltweit vertrieben. Zu diese Kaffeekapseln passende Extraktionskaffeemaschinen gehören zu den weitest verbreiteten Extraktionskaffeemaschinen und auch diese Maschinen werden unter dem geschützten Warenzeichen Nespresso® angeboten. Es ist daher nicht verwunderlich, dass nun eine Vielzahl von Kaffeekapseln auf dem Markt erhältlich sind, die zu diesen Extraktionskaffeemaschinen kompatibel gestaltet sind.

### Stand der Technik

Die Mehrzahl aller heute auf dem Markt erhältlichen Kaffeekapseln haben alle eine im wesentlichen gleiche äussere Gestalt, wie sie bereits aus dem US Patent 4 136 202 bekannt ist. Während die Original Nespresso® Kapseln nach wie vor aus Aluminium sind, sind die kompatiblen Nachahmerkapseln aus Kunststoff gefertigt. Diese bekannten Kaffeekapseln besitzen eine im wesentlichen konische Mantelwand, an deren oberen Becherrand ein umlaufender Flansch angeordnet ist und dessen Becherboden vollständig geschlossen ist. Die Ausgestaltung der Kapselbecher müssen auf die Extraktionskaffeemaschinen angepasst sein. Diese Maschinen besitzen einen Extraktionsbecher, in dem die Kaffeekapsel während des Extraktionsvorganges gehalten wird, und folglich müssen die Kapselbecher möglichst genau der Form der Extraktionsbecher in den Extraktionskaffeemaschinen angepasst sein.

Während ursprünglich die Injektion des Wassers mittels einer einzigen Injektionsnadel zentrisch durch den Becherboden eingeführt wurde, erfolgt dies heute mittels drei in gleichmässigen Abständen um das Zentrum herum angeordneten Injektionsnadeln. Diese Art der Wasserinjektion sichert einen verbesserten, den Kapselraum vollständig durchströmenden Wasserfluss.

Bei den aus Kunststoff spritzgusstechnisch gefertigten Kapselbechern hat man sich vorerst darauf beschränkt, Lösungen auf den Markt zu bringen, bei denen der Boden des Kapselbechers nicht perforiert werden muss. Solche Lösungen werden bevorzugt, einerseits aus patentrechtlichen Gründen, aber andererseits auch, weil man befürchtete, dass die heissen Injektionsnadeln durch die Berührung mit dem Kunststoff verstopfen oder zumindest verkleben könnten, wenn diese mit den heissen Injektionsnadeln in Berührung kommen. Entsprechend hat man diverse Varianten vorgesehen, bei denen der Boden des Kapselbechers bereits mit vorgefertigten Löchern versehen war. Diese Varianten bedingten aber zwingend eine gasdichte Umverpackung aus Aluminium beschichteten Kunststofffolien, die einen Aromaschutz gewährleisten. In einem späteren Schritt sind dann Kapselbecher auf dem Markt erschienen, die vollständig geschlossen waren. Eine solche Lösung zeigt beispielsweise die WO 2012/137052, bei der am Kapselbecher erhöhte Drucknoppen vorgesehen sind, die mindestens teilweise von Sollbruchlinien umgeben sind und beim Einpressen des Kapselbechers in den Extraktionsbecher der Maschine geöffnet werden.

Heute sind jedoch eine Vielzahl von rotationssymmetrischen Kapselbechern auf dem Markt, die einen vollständig geschlossenen Becherboden aufweisen. Hierbei handelt es sich um Kapselbecher, die aus einem Kunststoff gefertigt sind, die einen etwas erhöhten Erweichungstemperaturbereich aufweisen, so dass die Gefahr des Anschmelzens des Kunststoffes an den Injektionsnadeln beim Durchdringen des Bodens der Kapselbecher nicht mehr erfolgt.

Die formliche Ausgestaltung des Bodens der Kapselbecher lässt sich praktisch auf zwei Varianten reduzieren. Die eine Version sieht eine vollständig plane Ausgestaltung des Becherbodens vor, während die andere Version eine konvexe, nach aussen bombierte Form des Becherbodens zeigt. Die erste Version zeigt beispielsweise die EP 512 468, während die zweite Version beispielsweise aus der EP 554 469 hervorgeht. Beide Versionen sind bei Kapselbechern, die aus Aluminium gefertigt sind, völlig unproblematisch. Bei Versionen, die aus Kunststoff gefertigt sind, sind aber beide Versionen sehr wohl problematisch. Bei der Erwärmung vom Kapselbecher aus Kunststoff wird dieser weich und verformt sich auch bei bereits geringen Krafteinfluss, wie dieser durch das Eindringen der Injektionsnadel erfolgt. Dies führt dazu, dass der Boden des Kapselbechers dem Druck der Nadel ausweicht und nach innen wölbt, so dass dadurch die Nadeln oftmals ungenügend oder teilweise nicht von den Injektionsnadeln vollständig durchdrungen wird. Dies führt dazu, dass der Extraktionsvorgang in der Kapsel nur ungenügend erfolgt und der Kaffee entsprechend wässerig schmeckt. Zudem gelangt ein Teil des heissen Wassers ausserhalb des Kapselbechers in den Extraktionsbecher der Extraktionskaffeemaschine. Als Folge dieses Effektes mussten die Kapselbecher mit Dichtungen versehen werden.

### Aufgabe der Erfindung

Es ist somit die Aufgabe der vorliegenden Erfindung, einen Kapselbecher gemäss dem Oberbegriff des Patentanspruches 1 zu schaffen, der ein verbessertes Eindringen der Injektionsnadeln durch den Becherboden eines aus Kunststoff gefertigten Kapselbechers sicherstellt.

Diese Aufgabe löst ein Kapselbecher mit den Merkmalen des Patentanspruches 1. Der Kapselbecher hat eine umlaufende, nach aussen gerichtete Ringwand, an der der Boden einstückig angeformt ist und dieser eine gegenüber der Ringwand nach innen versetzte, kreisförmige Platte aufweist, die über einer nach innen geneigte Ringfläche mit der Ringwand verbunden ist, wobei die Ringfläche gegenüber der Ringwand und der Platte verdünnt ist und so eine Injektionsmembran bildet.

Die aus Aluminium gefertigten Kapselbecher sind praktisch unelastisch und weisen ein plastisches Verhalten auf. Betrachtet man die aus der EP 554 469 bekannte Form eines Kapselbechers, so wird hier der Becherboden anschliessend an der konischen Mantelwand durch eine konische Ringfläche gebildet, die zum Zentrum hin geneigt ist und an der mittig eine kleine ebene Bodenplatte anschliesst. Diese Formgebung versteift bei einer Ausführung aus Aluminium den Kapselboden im Bereich, in der die Injektionsnadeln eindringen, nämlich in der konischen Ringfläche des Bodens. Bei einer Version aus Kunststoff hingegen ist dies keinesfalls zutreffend. Hier springt praktisch durch die Erwärmung und Erweichung des Materials unter Druck, diese nach aussen gewölbte Bodenform nach innen und damit von den Injektionsnadeln weg. Dies führt zu dem zuvor beschriebenen Phänomen, dass die Injektionsnadeln schliesslich nicht oder nicht vollständig durch den Kapselboden hindurch geführt werden. Nur wenn mindestens ein Teil der Injektionsnadeln vollständig durch den Becherboden hindurch geführt sind, wird in der Kapsel kurzfristig ein erhöhter Druck aufgebaut, der dann die nach aussen bombierte Aluminiumfolie, die auf dem Flansch aufgeschweisst ist, wunschgemäss perforiert und der eigentliche Extraktionsvorgang stattfinden kann. Beim Aufbau des Innendruckes kann es bei einem Kapselbecher aus Kunststoff dann passieren, dass die konische Ringfläche durch den Druckaufbau sich wieder nach aussen wölbt und die zuvor nicht oder unvollständig eingedrungenen Injektionsnadeln dann doch noch vollständig eindringen können. Gelangt jedoch zuviel Wasser und Dampf in den Bereich zwischen den Extraktionsbecher der Kaffeeextraktionsmaschine und der Aussenseite der Kaffeekapsel, so hebt der so aufgebaute Druck im Extraktionsbecher den Innendruck im Kapselbecher auf und ein Zurückspringen in die konvexe Ausgangsform des Kapselbodens kann nicht erfolgen. Dank der erfindungsgemässen Ausgestaltung des Kapselbechers kann die zuvor beschriebene Formveränderung des Bodens des Kapselbechers nicht erfolgen. Die Formgebung hat praktisch diese Formveränderung vorweggenommen. Eine weitere Verformung ist nicht möglich.

Weitere besonders bevorzugte Ausführungsmerkmale des Erfindungsgegenstandes gehen aus den abhängigen Patentansprüchen hervor und deren Bedeutung ist in der nachfolgenden Beschreibung unter Bezug auf die beiliegenden Zeichnungen erläutert.

In der Zeichnung ist eine bevorzugte Ausführungsform des Erfindungsgegenstandes dargestellt. Es zeigt:
- Fig. 1: einen diametralen Vertikalschnitt durch eine bevorzugte Ausführungsform des Kapselbechers,

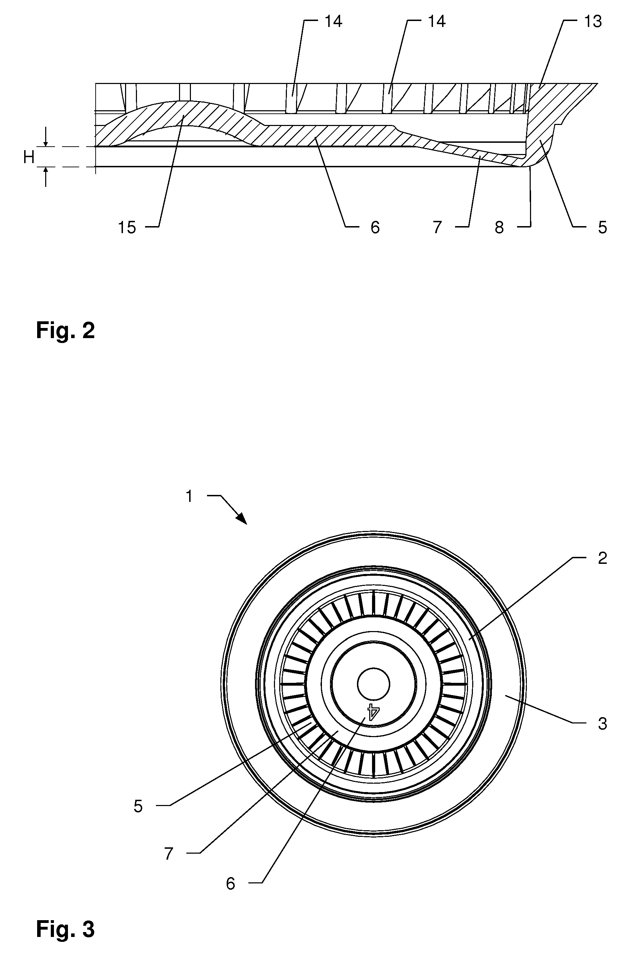

- Fig. 2: einen Teilschnitt durch den Becherboden in einem grösseren Massstab, und
- Fig. 3: eine Ansicht von oben in den Innenraum des Kapselbechers in einem kleineren Massstab als der Diametralschnitt gemäss der Fig. 1.

### Kurze Beschreibung der Zeichnungen

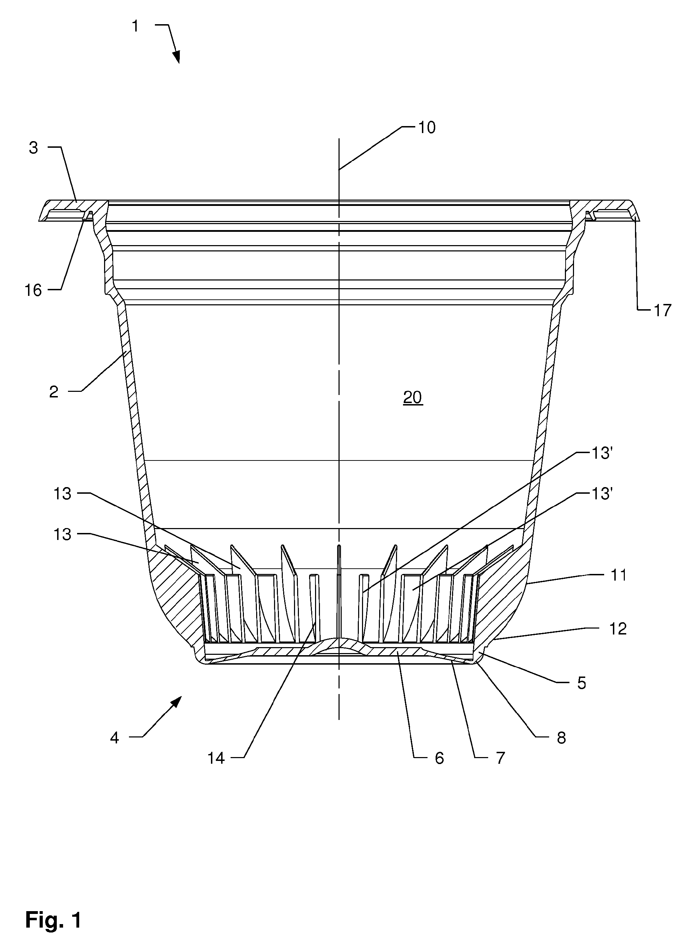

Der in der Fig. 1 dargestellte Kapselbecher ist insgesamt mit 1 bezeichnet. Der Kapselbecher 1 wird im wesentlichen durch eine konische Mantelwand 2 gebildet, die am oberen Rand in einem nach aussen kragenden Flansch 3 endet. Dieser Flansch 3 dient primär dazu, eine den Kapselbecher verschliessende Kunststoff- oder Aluminiumfolie darauf zu verschweissen. Sekundär dient dieser Flansch in der

Kaffeeextraktionsmaschine den Kapselbecher exakt positioniert klemmend zu halten. Die formliche Ausgestaltung des Flansches 3 muss selbstverständlich dem maschinenseitigen Extraktionsbecher angepasst geformt sein.

An seinem verjüngten Ende ist der Kapselbecher durch den Becherboden 4 verschlossen. Der Becherboden 4 weist keine Öffnungen auf, sondern wird erst durch die maschinenseitigen Injektionsnadeln bei deren Benutzung perforiert.

Der Becherboden wird von einer umlaufenden Ringwand 5 peripher begrenzt. Die Höhe der umlaufenden Ringwand beträgt 0,5 - 4 mm, bevorzugterweise jedoch zwischen 2 und 3,5 mm. Die parallel zu der Rotationsachse vertikal nach unten, nach oben oder nach unten und oben relativ zum unteren Rand 9 der Mantelwand 2 gerichtete Ringwand 5, bildet eine Versteifung des Kapselbecherbodens 4. Der eigentliche Becherboden weist zwei Bereiche auf, nämlich einerseits eine zentrische, kreisrunde Platte 6 und andererseits eine daran einstückig anschliessende, zum Becherinnern hin geneigte umlaufende Ringfläche 7, die wiederum einstückig mit der Ringwand 5 verbunden ist. Die Wandstärke der Ringfläche 7 ist geringer als die Dicke der Platte 6 und ebenfalls geringer als die Wandstärke der Ringwand 5. Diese Ringfläche 7 bildet eine Injektionsmembran. Der Begriff "Injektionsmembran" soll einerseits die geringe Wandstärke der Ringfläche 7 andeuten, während der Begriff andererseits darauf hinweist, dass diese Membran dort angeordnet ist, wo die maschinenseitigen Injektionsnadeln den Becherboden 4 des Kapselbechers 1 durchstechen. Die Ringfläche 7 ist so breit bemessen, dass die Injektionsnadeln auch bei den zulässigen und möglichen zentrischen Abweichungen des Kapselbechers in der gehaltenen Position im Extraktionsbecher immer noch in diesem Bereich der Ringfläche 7 liegen.

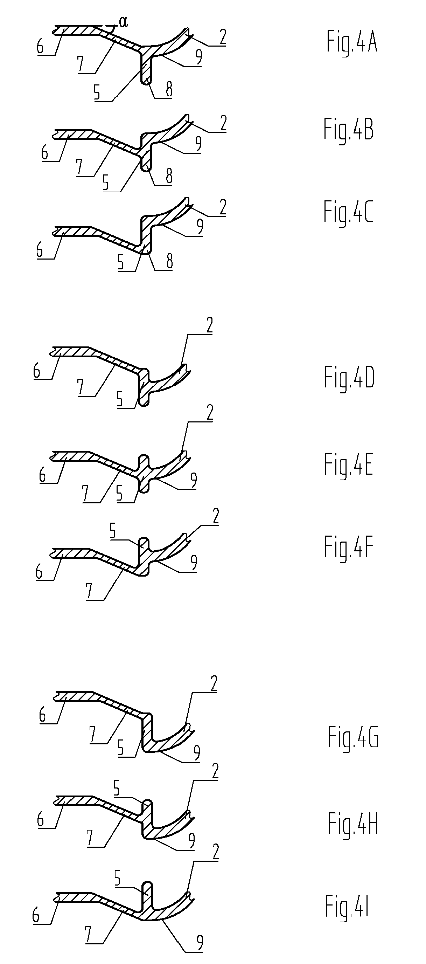

Die Anbindung der Ringfläche 7 erfolgt immer an der Ringwand 5. Dies kann auf einer beliebigen Höhe der Ringwand 5 erfolgen. In der Figur 4 sind die diversen Möglichkeiten schematisch dargestellt. Sämtliche Teilschnitte der Figuren 4 sind diametral verlaufend, aber im Gegensatz zur Fig. 1 nicht durch eine Stützlamellen 13, 13' hindurch, sondern zwischen zwei Stützlamellen 13, 13' verlaufend gelegt.

Die Figur 4C zeigt eine Lösung, welche der Ausführung gemäss der Figur 1 entspricht. Die Anbindung der Ringfläche 7 erfolgt hier, wie bereits zuvor beschrieben, am unteren Rand 8 der Ringwand 5. Die Anbindung der Ringfläche 7 kann aber auch an einer beliebigen Zwischenhöhe an der Ringwand 5 erfolgen, wie in Figur 4B gezeigt, letztlich kann die Anbindung der Ringfläche 7 an der Ringwand 5 auch am Fuss der Ringwand 5 erfolgen, wobei dies praktisch auf der Höhe des unteren Randes 9 der Mantelwand 2 liegt. Diese Lösung zeigt die Figur 4A.

Zwingend ist jedoch, dass die Ringfläche 7 von der Anbindungsstelle an der Ringwand 5 zur Platte 6 hin immer in einem Negativwinkel α zum Innenraum 20 des Kapselbechers 1 hin verläuft. Dieser Negativwinkel liegt üblicherweise in einer Grösse zwischen 5° und 30°, je nach der Höhendifferenz zwischen der Anbindungsstelle der Ringfläche 7 an der Platte 6.

In den Figuren 4D - 4F ist die Ringwand 5 in Bezug auf den unteren Rand 9 der Seitenwand 2 des Kapselbechers 1 so versetzt, dass diese vom unteren Rand 9 der Seitenwand 2 sowohl nach oben, in den Innenraum 20 des Kapselbechers 1 hinein, als auch nach unten relativ zur Anbindungsstelle an die Seitenwand 2, sich erstreckt. Auch hier kann die Anbindung der Ringfläche 7 an die Ringwand 5 auf verschiedenen Höhen erfolgen, wie dies die Figuren 4D - F zeigen.

Die Figuren 4G bis 4I zeigen schliesslich noch jene Varianten, bei denen die Ringwand 5 von der Anbindungsstelle an den untersten Rand 9 der Seitenwand 2 vollständig in den Innenraum 20 hinein gerichtet ist. Wiederum kann nun die Anbindungsstelle der Ringfläche 7, die die Verbindung mit der Platte 6 bildet, auf verschiedenen Höhen an der Ringwand 5 angeformt sein, nämlich zuoberst (Fig. 4G) oder zuunterst (Fig. 4I) oder dazwischen (Fig. 4H).

Die Platte 6 des Becherbodens 4 ist gegenüber dem unteren Rand 8 der Ringwand 5 um eine Höhe H von 0,3 bis 1,0 mm zum Innenraum hin versetzt. Sowohl der untere Rand 8 der Ringwand 5 wie auch die Platte 6 verlaufen in parallelen Ebenen, die wiederum parallel zur Ebene verlaufen, in der der Flansch 3 sich erstreckt und senkrecht zur Symmetrieachse 10 des Kapselbechers 1.

Die konische Mantelwand 2 des Kapselbechers 1 geht bevorzugt, aber nicht zwingend durch zwei gegenläufige Krümmungen 11, 12 direkt in die Ringwand 5 über. In diesem Bereich sind im Innenraum des Kapselbechers 1 mehrere Stützlamellen 13 angeordnet. Die Stützlamellen 13 werden durch Stirnkanten 14 zum Zentrum hin begrenzt. Diese Stirnkanten verlaufen mindestens annähern parallel zur Symmetrieachse 10. Die Stirnkanten 14 gehen direkt fluchtend mit der Innenfläche der umlaufenden Ringwand in diese über. Damit ist die Krafteinleitung eines Drucks auf den unteren Rand der Ringwand 8 über die Stützlamellen 13 optimal in die Mantelwand 2 des Kapselbechers 1 eingeleitet. Die exakte Form der Stützlamellen ist am deutlichsten bei den im Diametralschnitt geschnittenen Lamellen erkennbar. Bei den Stützlamellen sind alle Stirnkanten 14 gleich lang. Bei der peripheren Anbindung dieser Stützlamellen an der Mantelwand 2, erstrecken sich abwechslungsweise die einen Stützlamellen 13' lediglich bis auf die Höhe des Überganges der konischen Mantelwand 2 bis in die zwei gegenläufigen Krümmungen 11, 12, die in umlaufende Ringwand 5 übergehen. Die anderen Stützlamellen 13 weisen in Richtung des Flansches geneigt nach oben und erstrecken sich bis in den Bereich der konischen Mantelwand 2 hinein.

Wie bereits erwähnt, wird der Kapselbecher 1 aus Kunststoff gespritzt. Bei einem üblichen Spritzvorgang kann im Prinzip die Injektionsdüse der Spritzgussform an einer beliebigen Stelle in die Kavität münden, in der der Kapselbecher 1 geformt wird. Hier wird jedoch bevorzugterweise der Kapselbecher 1 mittels Ko-Injektion mit einer Sperrschicht versehen hergestellt. Bei einem Ko-Injektionsverfahren sollte die gesamte Kavität von der Injektionsstelle aus möglichst überall gleich lange Strömungswege vorhanden sein, um die Sperrschicht nicht zu zerstören. Diese Bedingung ist bei einem rotationssymmetrischen Körper, wie dies der hier vorliegende Kapselbecher ist, gegeben, wenn die Injektionsdüsenmündung in der Rotationssymmetrieachse liegt. Die Injektionsdüsenmündung ragt hierbei in eine Injektionsdüsenmulde 15.

Die Erfindung betrifft auch eine Spritzgussform, die zur Fertigung der erfindungsgemässen Kapselbecher aus Kunststoff geeignet ist. Eine solche Spritzgussform weist mindestens eine Kavität auf, die der Negativform des Kapselbechers 1 entspricht. Bevorzugterweise soll eine solche Spritzgussform mit einer Ko-Injektionsdüse ausgerüstet sein, um den Kapselbecher ko-injiziert mit einer Sperrschicht versehen herzustellen.

Der erfindungsgemässe Kapselbecher ist dank seiner Formgebung auch dann, wenn der Becher im relativ heissen Extraktionsbecher der Kaffeeextraktionsmaschine sich entsprechend erwärmt, immer noch formstabil. Insbesondere die Ringfläche 7, welche die Injektionsmembran 7 bildet, kann sich praktisch kaum verformen. Die Injektionsmembran 7 ist zwischen der Platte 6 und dem unteren Rand der Ringwand 5 in einer ständig gespannten Position. Beim Eindringen der Injektionsnadeln verformt sich diese Ringfläche praktisch nicht und erst, wenn im Kapselbecher ein Druck aufgebaut wird, kann sich unter diesem aufgebauten Innendruck die Platte 6 leicht anheben, was aber lediglich dazu führt, dass alle Injektionsnadeln gleichmässig tiefer in den Kapselbecher 1 eindringen. Im Gegensatz zu den heute üblichen und bekannten Kapselbechern mit einem nach aussen bombierten Boden ist somit die unter Druck auftretende, nach innen gerichtete Verformung praktisch bereits vorweggenommen und kann daher nicht mehr erfolgen. Hiermit erfolgt die Performation der als Injektionsmembran gestalteten Ringfläche immer gleichmässig.

Dadurch, dass sowohl die Wandstärke der konischen Mantelwand, die Wandstärke der Ringwand und die Dicke der Platte mindestens annähernd alle gleich sind, wird einerseits erreicht, dass ein möglichst formstabiler Kapselbecher entsteht und andererseits eine möglichst gleichförmige Strömungsbewegung während der Fertigung des Kapselbechers vorliegt, was für die Fertigung mit einer Sperrschicht besonders optimal ist. Lediglich die Ringfläche 7, welche die Injektionsmembran bildet sowie die Stützlamellen 13, 13' weisen eine geringere Wandstärke auf. Bevorzugterweise weist die Wandstärke insbesondere der als Injektionsmembran dienenden Ringfläche eine Wandstärke auf, die maximal der halben Wandstärke der Mantelwand der Ringwand und der Dicke der Platte entspricht. Lediglich der Vollständigkeit halber sei noch erwähnt, dass hier wie bei den meisten Kapselbechern auf der in Richtung des Becherbodens hin gelegenen Fläche des Flansches 3 eine umlaufende Dichtlippe vorgesehen sein kann, die den Kapselbecher gegenüber dem Extraktionsbecher der Kaffeeextraktionsmaschine abdichtet. Der periphere Rand des Flansches 3 hat einen zum Becherboden 4 hin abgewinkelten Rand 17 oder weist eine Dichtwulst auf, welcher der Zentrierung und Klemmung des Kapselbechers 1 im Extraktionsbecher der Extraktionsmaschine dient.

### Bezugszeichenliste:

- 1: Kapselbecher
- 2: Konische Mantelwand
- 3: Flansch
- 4: Becherboden
- 5: Umlaufende Ringwand
- 6: Platte
- 7: Ringfläche
- 8: Unterer Rand der Ringwand
- 9: Unterer Rand der Mantelwand 2
- 10: Symmetrieachse
- 11, 12: zwei gegenläufige Krümmungen
- 13: Stützlamellen
- 13': kürzere Stützlamellen
- 14: Stirnkanten der Stützlamellen
- 15: Co-Injektionsdüsenmulde
- 17: abgewinkelter Rand des Flansches 3
- 20: Innenraum

## Patentansprüche

1. Auf die Form eines Extraktionsbechers einer Extraktionskaffeemaschine mit mehreren Injektionsdüsen angepasster, spritzgusstechnisch gefertigter, rotationssymmetrischer Kapselbecher (1) aus Kunststoff mit einer im wesentlichen konischen Mantelwand (2), an dessen oberen Becherrand ein umlaufender Flansch (3) angeformt ist und einen Becherboden (4), der vollständig geschlossen ist, **dadurch gekennzeichnet, dass** der Becherboden (4) eine umlaufende Ringwand (5) aufweist, an den der Becherboden (4) einstückig angeformt ist und dieser eine gegenüber der Ringwand (5) nach innen versetzte kreisförmige Platte (6) aufweist, die über einer nach innen geneigten Ringfläche (7) mit der Ringwand (5) verbunden ist, wobei die Ringfläche (7) gegenüber der Ringwand (5) und der Platte (6) verdünnt ist und eine Injektions-Membran bildet.

2. Kapselbecher aus Kunststoff nach Anspruch 1, **dadurch gekennzeichnet, dass** sich die Ringwand (5) von einer Anbindungsstelle an den untersten Rand (9) der Seitenwand (2) nach unten (Fig. A-C), nach oben (Fig. 4G-I) oder nach unten und oben (Fig. 4D-F) hin erstreckt.

3. Kapselbecher aus Kunststoff nach Anspruch 2, **dadurch gekennzeichnet, dass** die Ringfläche (7) an der Ringwand (5) zuunterst (Fig. 4C, F, I), zuoberst (Fig. 4A, D, G) oder dazwischen (Fig. 4B, E, H) angeformt ist.

4. Kapselbecher aus Kunststoff nach Anspruch 1, **dadurch gekennzeichnet, dass** die konische Mantelwand (2) des Kapselbechers (1) in zwei gegenläufige Krümmungen (11, 12) in die Ringwand (5) übergeht.

5. Kapselbecher aus Kunststoff nach Anspruch 4, **dadurch gekennzeichnet, dass** im Übergangsbereich von der konischen Mantelwand (2) zur Ringwand (5) mehrere, im Innenraum (20) des Kapselbechers (1) angeordnete, zur Rotationsachse hin gerichtete, radial verlaufende Stützlamellen (13, 13') vorhanden sind.

6. Kapselbecher aus Kunststoff nach Anspruch 5, **dadurch gekennzeichnet, dass** die Stützlamellen nach innen gerichteter Begrenzungskanten (14) mit der Innenfläche der Ringwand (5) fluchten.

7. Kapselbecher aus Kunststoff nach Anspruch 1, **dadurch gekennzeichnet, dass** die Wandstärke der konischen Mantelwand (2), die Wandstärke der Ringwand (5) und die Dicke der Platte (6) mindestens annähernd gleich sind.

8. Kapselbecher aus Kunststoff nach Anspruch 5, **dadurch gekennzeichnet, dass** die Wandstärke der Stützlamellen (13, 13') maximal die halbe Wandstärke der Mantelwand (2) beträgt.

9. Kapselbecher aus Kunststoff nach Anspruch 1, **dadurch gekennzeichnet, dass** der Kapselbecher (1) co-axial mit einer Sperrschicht gespritzt ist.

10. Spritzgussform mit mindestens einer Kavität, die so gestaltet ist, dass diese einen Kapselbecher definiert gemäss mindestens einem der Ansprüche 1 bis 9.

11. Spritzgussform nach Anspruch 10, **dadurch gekennzeichnet, dass** diese mit einer Co-Injektionsdüse versehen ist, die im Zentrum jenes Kavitätsbereiches mündet, die die Platte (6) definiert.
